# EUROPÄISCHE PATENTSCHRIFT

(11) **EP 3 272 406 B1**
(45) Veröffentlichungstag und Bekanntmachung des Hinweises auf die Patenterteilung: **25.12.2019**
(21) Anmeldenummer: 17167740.4
(22) Anmeldetag: 24.04.2017
(51) Int. Cl.: B01D 29/11, B01D 29/52, B01D 29/94

(54) **KERZENFILTER MIT SEGMENTEN**
CANDLE FILTER WITH SEGMENTS
FILTRE A BOUGIE AVEC DES SEGMENTES

(30) Priorität: 21.07.2016 DE 102016113440
(43) Veröffentlichungstag der Anmeldung: 24.01.2018
(73) Patentinhaber: Putsch GmbH & Co. KG, 58095 Hagen (DE)
(72) Erfinder: HENSEL, Rainer, 58640 Iserlohn (DE); SCHICK, Rudolf, 58091 Hagen (DE); SÖDER, Benedikt, 58095 Hagen (DE)
(74) Vertreter: Köchling, Conrad-Joachim

(56) Entgegenhaltungen:
- EP-A1- 1 243 300
- DE-A1- 2 140 159
- US-A- 3 356 215
- US-A- 3 530 989
- US-A- 4 525 274

## Beschreibung

Die Erfindung betrifft einen Filter zur Filtration von Suspensionen, insbesondere zur Filtration von Zuckersäften, zumindest aufweisend ein Gehäuse mit Zulauf zur Zuführung der zu filtrierenden Suspension, einen Ablauf für das gefilterte, klare Filtrat, und einen weiteren Ablauf oder eine Abgabeöffnung zur Abgabe des Filterkuchens, wobei das Gehäuse einen zylindrischen Teil mit einem abnehmbaren Deckel aufweist, wobei im zylindrischen Teil eine Vielzahl von Filterelementen in Gruppen angeordnet sind, die aus streifenartigen Filterkörpern bestehen, die von einem strumpfartigen Filtertuch umhüllt sind.

Derartige Filter, insbesondere zur Filtration von Zuckersäften, sind im Stand der Technik vielfach bekannt und haben sich ansich bewährt.

Dabei werden bei im Stand der Technik bekannten Filtern häufig im Querschnitt kreisrunde oder ovale Filterkerzen, bestehend aus einem Tragkörper aus Metall, einem Stützkörper mit Wandungsdurchbrüchen und einem über den Stützkörper gezogenen Filterstrumpf, verwendet.

Derartige Filterkerzen sind beispielsweise aus der DE-GM 78 31 204 oder aus der DE 32 49 756 C2 bekannt.

Aus der deutschen Gebrauchsmusterschrift G 90 11 918 ist eine weitere, hinsichtlich der Herstellung und Montage vereinfachte, Filterkerze ähnlicher Art bekannt.

Auch hierbei weist der Filterkörper einen kreisrunden oder oval flachen Querschnitt auf.

Alle diese Filter verfolgen das Ziel, aus zugeführter Suspension klares Filtrat einerseits und einen eingedickten Schlammsaft, der auch als Filterkuchen bezeichnet wird, andererseits zu erhalten. Um eine möglichst gleichmäßige Strömungsverteilung der zugeführten Suspension innerhalb des Gehäuses zu erreichen, ist es bekannt, zumindest einen wesentlichen Teil des Gehäuses, in dem sich die Filterelemente befinden, zylindrisch auszubilden.

Die Filterleistung, also die Menge des zu erzielenden Filtrats pro Zeiteinheit hängt dabei maßgeblich ab von der Filterfläche pro Volumen. Dies bedeutet, dass mit steigender Filterfläche bei gleichbleibenden Volumen auch der Ertrag an klarem Filtrat steigt. Dabei ist der Abstand zwischen den aufgespannten Filtertüchern nicht variabel, da der Abstand für sowohl den Aufbau von Filterkuchen beim Filtrieren als auch für eine spätere Entfernung bei der Reinigung beziehungsweise Spülung des Filters wichtig und nötig ist.

Ein gattungsgemäßer Filter zur Filtration von Suspensionen, insbesondere zur Filtration von Zuckersäften, ist aus der DE 2140159 A1 bekannt.

Aus der US 3 356 215 ist ein weiterer gattungsgemäßer Filter zur Filtration von Suspensionen bekannt.

Aufgrund des Eingangs genannten Standes der Technik liegt der vorliegenden Erfindung die Aufgabe zugrunde, einen Filter der eingangs genannten Art hinsichtlich seiner Bedienung, Wartung und seiner Filterleistung zu verbessern, wobei die Filterfläche pro Volumen deutlich vergrößert ist, der ferner eine besonders hohe Lebensdauer aufweist und relativ einfach zu fertigen ist.

Zur Lösung dieser Aufgabe schlägt die Erfindung vor, dass die Filterelemente an einem segmentartigen Filterträger befestigt sind, der eine Einlasskammer für das aus den Filterelementen abströmende Filtrat aufweist, dass mehrere Filterträger samt Filterelementen in das Gehäuse von einer Oberseite her einsetzbar und nebeneinander fixierbar sind, wobei die segmentartigen Filterträger zusammen einen kreisrunden Einsatz bilden, und dass jede Einlasskammer eine Abströmöffnung für Filtrat aufweist, wobei die Abströmöffnungen an eine Ringleitung angeschlossen sind, die das Gehäuse außenseitig umgibt und an diesem fixiert ist, von der das gesammelte Filtrat an eine angeschlossene Aufnahmeeinrichtung abführbar ist, wobei der Deckel in Betriebslage des Filters die obere Einsatzöffnung des Gehäuses verschließt.

Vorteilhafte Weiterbildungen der Erfindung sind in den Patentansprüchen 2 bis 15 beschrieben.

Die Erfindung zeigt einen Filter zur Filtration von Suspensionen, insbesondere zu Filtration von Zuckersäften, bei dem jeweils eine Vielzahl von Filterelementen, bestehend aus je einem Filterkörper mit einem über den Filterkörper gespannten und diesen umhüllenden Filtertuch, an einem segmentartigen Filterträger angeordnet sind. Die segmentartigen Filterträger ergänzen sich zu einem kreisrunden Einsatz, der etwa die gesamte Kreisfläche des zylindrischen Teils des Gehäuses abdeckt. Dabei weist jeder segmentartige Filterträger eine Einlasskammer für das aus den Filterelementen abströmende Filtrat auf. Jede Einlasskammer weist wiederum eine Abströmöffnung für Filtrat auf, wobei alle Abströmöffnungen aller segmentartiger Filterträger beziehungsweise deren Einlasskammern an eine außenseitig das Gehäuse umgebende Ringleitung angeschlossen sind. Von dieser Ringleitung ist das gesammelte Filtrat aller segmentartiger Filterträger an eine angeschlossene Aufnahmeeinrichtung abführbar. In der Betriebslage des Filters ist die obere Einsatzöffnung des Gehäuses, in der sich die segmentartigen Filterträger befinden, durch den Deckel verschlossen. Die segmentartigen Filterträger weisen eine tortenstückähnliche Form auf. Sie bestehen dabei jeweils aus einer Vielzahl von etwa rechteckigen Filterkörpern mit Filtertüchern, die jeweils ein Filterelement bilden, die dabei innerhalb eines tortenstückähnlichen segmentartigen Filterträgers parallel zueinander angeordnet sind.

Durch diese tortenstückähnliche Form der segmentartigen Filterträger können die einzelnen Segmente jeweils schnell und einfach im Bedarfsfall aus dem Gehäuse durch Lösen und Herausziehen nach oben entfernt werden und beispielsweise durch ein gleichartiges tortenstückähnliches Segment ersetzt werden. So kann beispielsweise bei Beschädigungen einzelner Filterelemente eine Reparatur besonders schnell und einfach dadurch erfolgen, dass nur ein einzelnes Segment aus dem Filter herausgenommen und ersetzt wird. Alle weiteren Segmente, die keine Beschädigungen aufweisen, verbleiben während dieses Austausches innerhalb des Gehäuses. Ein derartiger Austausch kann beispielsweise auch dann nötig sein, wenn die Filterleistung eines einzelnen tortenstückähnlichen segmentartigen Filterträgers gegenüber den anderen segmentartigen Filterträgern nachlässt, was beispielsweise im Falle einer Verstopfung des Filtertuches beziehungsweise mehrerer Filtertücher der Fall sein kann.

Dadurch, dass der Zulauf durch ein die Gehäusewand unterhalb der segmentartigen Filterträger durchgreifendes und mittig im zylindrischen Teil des Gehäuses im Bereich der segmentartigen Filterträger ausmündendes Rohr gebildet ist, ist eine besonders gute und gleichmäßige Verteilung der Suspension im Filter ermöglicht. Dies wird insbesondere dadurch zusätzlich begünstigt, dass die Längsseitenflächen jedes Filterelementes in einer Parallelen zur radialen Mittelebene des jeweiligen segmentartigen Filterträgers angeordnet sind. Hierdurch ist das Fließen und somit die Verteilung der zugeführten Suspension im Filter in eine etwa radial nach außen gerichtete Fließrichtung ermöglicht. Durch diese etwa radiale Fließrichtung erfolgt eine optimale Verteilung der Suspension im Filtergehäuse und erhöht somit die Filterleistung des Filters.

Die Anzahl an segmentartigen Filterträgern, die zusammen einen kreisrunden Einsatz bilden, kann 4, 6, 8, 10 oder 12 betragen. Dabei hat sich in der Praxis die Anzahl 6 besonders bewährt.

Auch hat sich in der Praxis besonders bewährt, dass jeder segmentartige Filterträger vier nebeneinander angeordnete Reihen von Filterelementen aufweist. Dabei weist die äußerste erste Reihe und die daneben angeordnete zweite Reihe jeweils 16, die dritte Reihe 12 und die nahe des Zentrums angeordnete vierte Reihe 6 parallel zueinander angeordnete Filterelemente auf. Durch diese besonders große Anzahl an Filterelementen die in nebeneinander angeordneten Reihen innerhalb des jeweiligen segmentartigen Filterträgers angeordnet sind, ist eine besonders hohe Filterfläche bezogen auf das Volumen des zylindrischen Teils des Gehäuses des Filters erzielt. Somit ist auch die Filterleistung durch eine derartige Anordnung äußerst hoch, sodass eine besonders hohe Menge an klarem Filtrat innerhalb kürzester Zeit aus der zugeführten Suspension gefiltert werden kann.

Als weiteres Mittel zur Steigerung der Filterleistung weist jedes Filterelement etwa rechteckige Form auf und besteht aus einem Halter und einem am Halter angeordneten Doppelschlitzblech als Filterkörper. Das Doppelschlitzblech ist dabei flach und flexibel ausgebildet und von einem Filterstrumpf überzogen. Durch die Verwendung eines flachen und flexiblen Doppelschlitzbleches als Filterkörper ist ein besonders ergiebiges Abfließen von Filtrat, welches durch das Filtertuch, welches in diesem Fall durch einen Filterstrumpf gebildet ist, in Richtung des Doppelschlitzbleches ermöglicht. Das Doppelschlitzblech gibt dabei gegebenenfalls durch seine flexible Ausbildung nach und stellt insbesondere an Stellen, an denen der Druck ansteigt, kein starres Hindernis dar. Hierdurch ist jederzeit eine besonders hohe Abflussmenge an Filtrat ermöglicht.

Um das vom Filterkörper abfließende Filtrat an den segmentartigen Filterträger abzugeben, weist der Halter oben in Richtung des Filterträgers gerichtete und in diesen einmündende Abflussöffnungen für das Filtrat auf. Hierdurch ist die jederzeitige Abgabe des Filtrats aus dem Filterelement heraus in den segmentartigen Filterträger ermöglicht. Dies wird insbesondere dadurch vereinfacht und gefördert, dass das Filtrat innerhalb jedes Filterelementes nach Filterung durch das Filtertuch längsseitig entlang des Filterkörpers in Richtung der Abflussöffnungen des Halters fließt. Somit ist ein quasi ungebremstes und somit besonders effektives Abfließen des Filtrats aus dem Filterelement heraus durch die Abflussöffnungen ermöglicht.

Um ein besonders einfaches und zeitsparendes Austauschen, das heißt Herausnehmen und Wiedereinsetzen, eines segmentartigen Filterträgers zu ermöglichen, weist jeder segmentartige Filterträger etwa parallel zu den Filterelementen verlaufende Stützelemente, wie beispielsweise Stützstangen, auf. Die Stützstangen stützen sich in der Einbaulage auf entsprechenden Stützbereichen, die beispielsweise an der Gehäuseinnenseite und / oder am die Mittellängsachse bildenden Zulaufrohr ab und sind gegebenenfalls an diesen lagerichtig geführt. Somit kann ein segmentartiger Filterträger durch etwa senkrechtes Anheben aus dem Gehäuse heraus entfernt werden und in entgegengesetzter Richtung wieder in dieses eingesetzt werden. Zur lagerichtigen Positionierung sind dabei die Stützbereiche an den Gehäuseinnenseiten beziehungsweise am die Mittellängsachse bildenden Zulaufrohr ausgebildet. Beim Zuführen können die Stützstangen durch die Stützbereiche, die beispielsweise auch durch Ösen oder dergleichen Führungsmittel gebildet sein können, geführt werden, sodass jederzeit eine lagerichtige Zuführung sichergestellt ist.

Die segmentartigen Filterträger weisen eine etwa dreieckige Grundform auf, wobei die Stützelemente oder Stützstangen in den Eckbereichen des Dreiecks angeordnet sind.

Zur vereinfachten Handhabung und insbesondere Kontrolle des abfließenden Filtrats ist im Bereich von Ablaufrohren, die jeweils zwischen Abströmöffnung des segmentartigen Filterträgers und der außen um den zylindrischen Teil des Gehäuses umlaufenden zentralen Ringleitung im außerhalb des Gehäuses befindlichen Bereich ein Schauglas angeordnet. Dadurch, dass an jedem segmentartigen Filterträger im Bereich seines Ablaufes ein derartiges Schauglas angeordnet ist, kann ein Bediener jederzeit durch das Schauglas das Filtrat sehen und beurteilen, ob die Filterleistung in diesem Segment weiterhin ausreichend ist. Das heißt nach Beschädigung oder Verstopfung kann beispielsweise das im Schauglas sichtbare Filtrat einen gewissen Trübungsgrad aufweisen, welches den Bediener darauf hinweist, dass dieser segmentartige Filterträger nicht mehr die geforderte Filterleistung erzielt.

Um beispielsweise einen einzelnen segmentartigen Filterträger außer Betrieb zu setzen ist im Bereich von Ablaufrohren, die jeweils zwischen Abströmöffnung des segmentartigen Filterträgers und der außen um den zylindrischen Teil des Gehäuses umlaufenden zentralen Ringleitung im außerhalb des Gehäuses befindlichen Bereich ein Absperrventil angeordnet. Dieser segmentartige Filterträger kann beispielsweise durch einen Bediener nach Sichtung des Filtrats des betreffenden segmentartigen Filterträgers durch Betrachtung des Schauglases durch einfaches Absperren des Absperrventils außer Betrieb gesetzt werden. Somit ist dieser segmentartige Filterträger nicht mehr aktiv und der Filter kann bei verringerter Gesamtfilterleistung mit den verbleibenden, noch ausreichende Filterleistung liefernden, weiteren segmentartigen Filterträgern betrieben werden. Auch ist hierdurch auf besonders einfache Art und Weise eine Kontrolle des Gesamtergebnisses des Filters ermöglicht. Dies bedeutet, dass durch einfachen Blick auf die Schaugläser aller segmentartiger Filterträger ein Rückschluss auf die Qualität des Filtrats geschlossen werden kann.

Am Gehäuse ist an seinem dem Deckel entgegengesetzten Ende an den zylindrischen Bereich anschließend ein trichterartiger Bereich ausgebildet. Dabei bildet die Trichterspitze den verschließbaren Ablauf beziehungsweise die Abgabeöffnung zur Abgabe des Filterkuchens. Dadurch, dass dieser trichterartige Bereich in der Arbeitslage unterhalb des zylindrischen Bereiches angeordnet ist, kann entstehender Filterkuchen bereits während des Betriebes in diesen trichterartigen Bereich herabfallen. Zur Reinigung beziehungsweise Rückspülung kann diese Abgabeöffnung geöffnet werden und der gesammelte Filterkuchen aus der Abgabeöffnung heraus entfernt werden.

Jeder segmentartige Filterträger weist zur Bildung der Einlasskammer eine einen Hohlraum aufweisende Grundplatte auf. Die Grundplatte ist dabei einerseits mit den Abflussöffnungen des Halters des Filterelementes beziehungsweise der Filterelemente verbunden und andererseits mittelbar mit dem Ablauf des Filters verbunden. Zur schnellen und einfachen Befestigung der Halter der Filterelemente an dem segmentartigen Filterträger ist die Einlasskammer von Befestigungsmitteln, insbesondere Gewindebolzen die von den Haltern der Filterelemente kopfseitig abragen durchgriffen. Somit kann ein Filterelement auf besonders schnelle und einfache Art und Weise mit dem jeweiligen segmentartigen Filterträger verbunden und an diesem befestigt werden. Hierzu muss lediglich der Gewindebolzen, der kopfseitig vom Halter des Filterelements abragt, durch die entsprechende Lochung am segmentartigen Filterträger durchgesteckt werden, und anschließend verschraubt und somit befestigt werden

Die Erfindung stellt somit einen Filter zur Filtration von Suspensionen insbesondere zur Filtration von Zuckersäften zur Verfügung, der eine verbesserte Anordnung der Filterelemente innerhalb des Filtergehäuses aufweist, bei dem keinerlei Filterelemente den Flussstrom der zu filtrierenden Suspension behindert, beispielsweise durch quer zum Flussstrom angeordnete Filterelemente. Zusätzlich ermöglicht ein erfindungsgemäßer Filter eine besonders große Filterfläche in Bezug auf das Volumen. Hierdurch bedingt ist die Filterleistung vor einem wartungsbedingten Austausch, oder einer Reinigung oder Rückspülung gegenüber bekannten Lösungen deutlich vergrößert, sodass ein besonders kostensparender Einsatz des Filters insbesondere zur Filtration von großen Mengen von zugeführter Suspension ohne Unterbrechung erfolgen kann.

Die Filtration erfolgt dabei, in dem die Suspension durch das den Zulauf bildende Rohr im Bereich der segmentartigen Filterträger etwa zentral im zylindrischen Teil des Gehäuses ausmündet und die Suspension von dort in etwa radialer Richtung entlang der Längsseitenflächen der Filterelemente strömt. Dabei durchströmt das Filtrat den durch ein Filtertuch gebildeten Filterstrumpf, der jeden Filterkörper umhüllt und fließt längsseitig entlang des Filterkörpers durch die Abflussöffnungen jedes Halters des Filterelementes in die Einlasskammer des jeweiligen segmentartigen Filterträgers. Aus dieser Einlasskammer kann das Filtrat durch die Abströmöffnung des segmentartigen Filterträgers in ein außen um das Gehäuse herum nach Art einer Ringleitung angeordnetes Abflussrohr fließen, und aus diesem in ein entsprechendes Sammelbehältnis abgegeben zu werden. Um eine große Filterleistung zu erzielen, weisen derartige Filter ein hohes Gewicht und eine große Größe auf. So kann beispielsweise der Durchmesser des zylindrischen Teils des Gehäuses etwa 3000 mm betragen. Ein einzelnes Filterelement kann beispielsweise eine Länge von 2500 mm aufweisen und eine Breite von etwa 240 mm. Somit ergibt sich pro Filterelement eine Filterfläche von etwa 1 qm. Ein segmentartiger Filterträger kann beispielsweise eine Masse von etwa 700 kg aufweisen. Somit ist ein derartiger segmentartiger Filterträger deutlich einfacher aus dem Gehäuse zu entfernen als beispielsweise ein die gesamte Filterfläche bildendes kreisrundes Filterelement.

Die Rückspülung und somit Reinigung der Filtertücher von daran anhaftendem Filterkuchen erfolgt in dem Filtrat in umgekehrter Fließrichtung eingeleitet wird. Das heisst, Filtrat wird durch die Halter hindurch in Richtung des Filterkörpers geleitet und anschließend von innen durch die Filtertücher hinaus in Richtung der Umgebung. Dabei fällt anhaftender Filterkuchen ab und sammelt sich im trichterartigen Bereich des Gehäuses. Bei gleichzeitiger Öffnung des an der Trichterspitze angeordneten verschließbaren Ablaufes beziehungsweise der dortigen Abgabeöffnung kann der Filterkuchen somit aus dem trichterartigen Bereich herausgepresst werden.

Zusätzlich kann die Reinigung auch in einem zweistufigen Prozess vorgenommen werden, in dem in einem ersten Schritt die Abgabeöffnung des trichterartigen Bereiches geöffnet wird und der Filterkuchen durch diesen herausfällt. Anschließend wird diese Abgabeöffnung wieder verschlossen und in einem zweiten Schritt kann durch die eigentliche Zuführung an der Gehäuseseitenwand während eines Reinigungsprozesses restlicher Filterkuchen und Ablagerungen, die sich an den Filtertüchern anhaften, entfernt werden. Hierzu wird ausgangsseitig der segmentartigen Filterträger das System mit Flüssigkeit unter Überdruck beaufschlagt, sodass seitlich aus dem eigentlichen Zulauf heraus sich lösender Filterkuchen abgeführt werden kann.

Ein Ausführungsbeispiel der Erfindung ist in den Zeichnungen dargestellt und im Folgenden näher beschrieben.

Es zeigt:
- Figur 1: einen erfindungsgemäßen Filter in Zusammenbaulage seitlich von schräg oben gesehen mit aufgesetztem Deckel;
- Figur 2: desgleichen ohne Deckel;
- Figur 3: desgleichen aus Figur 1 in Seitenansicht geschnitten;

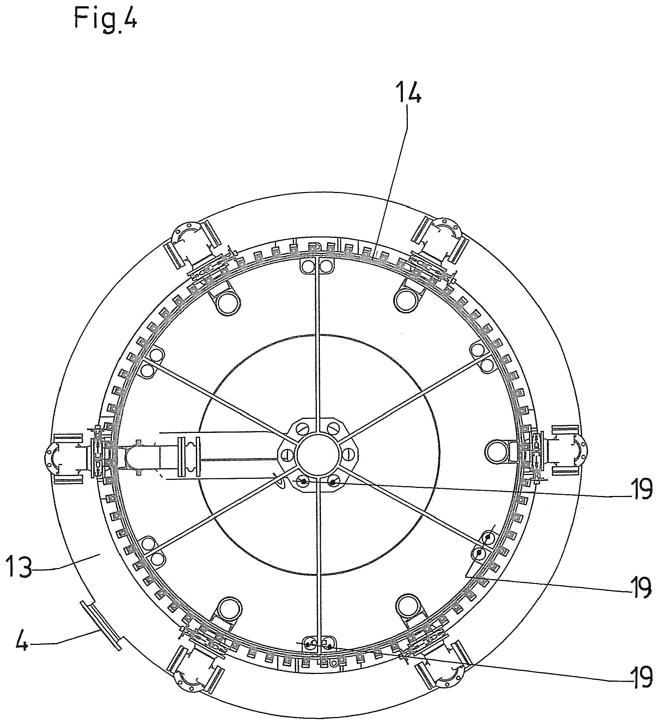

- Figur 4: ein Gehäuse von oben gesehen ohne Deckel und ohne segmentartige Filterträger;

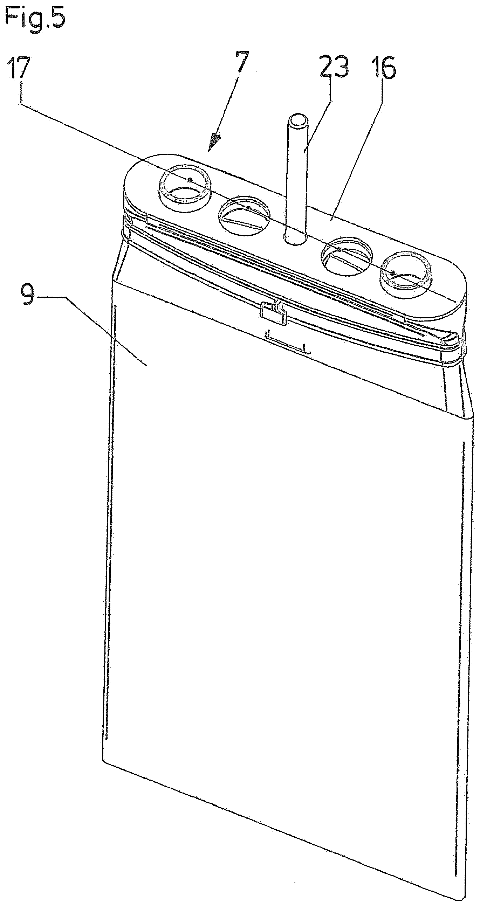

- Figur 5: ein erfindungsgemäßes Filterelement von schräg oben gesehen in Zusammenbaulage;

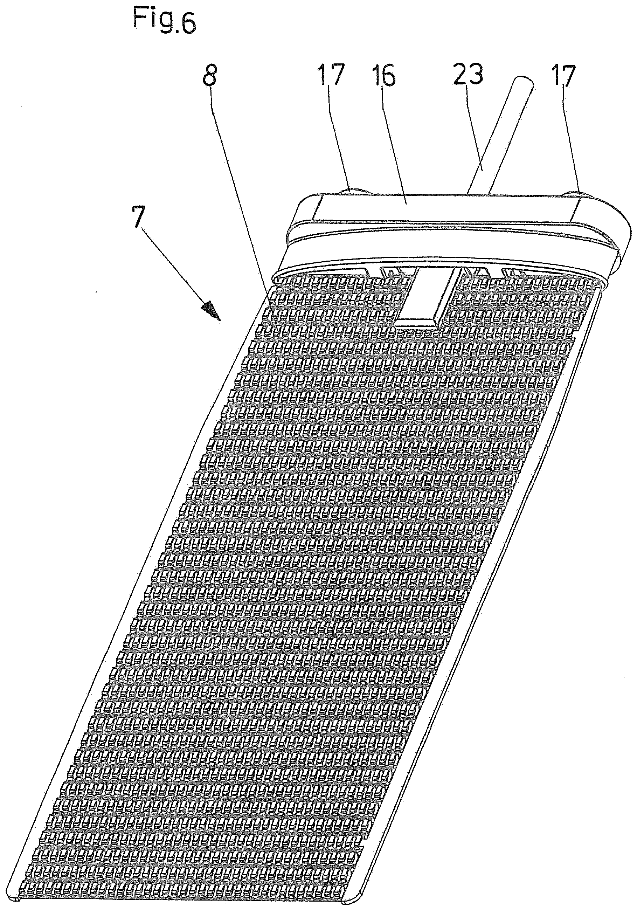

- Figur 6: desgleichen ohne Filtertuch;
- Figur 7: einen segmentartigen Filterträger in Seitenansicht mit Filterelementen;

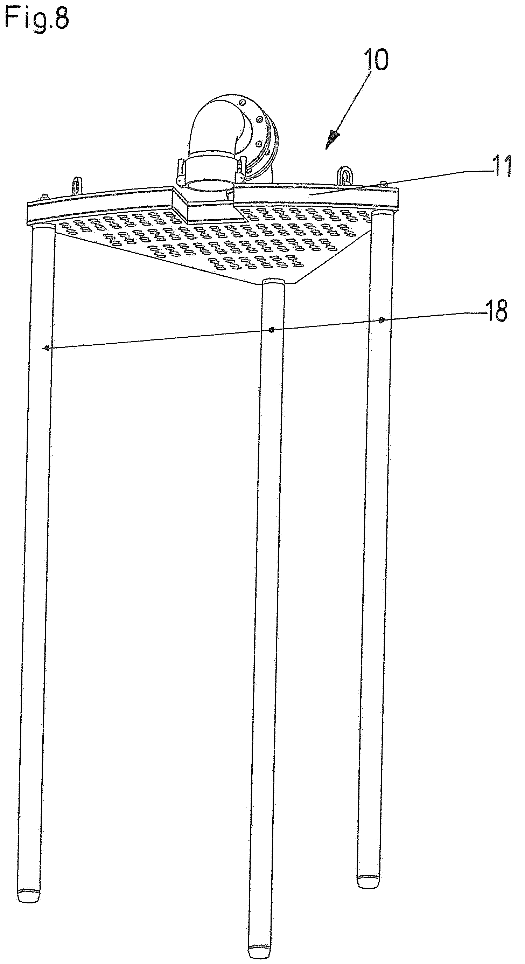

- Figur 8: desgleichen von schräg unten gesehen ohne Filterelemente.
- Figur 9: einen segmentartigen Filterträger mit Filterelementen von unten gesehen;

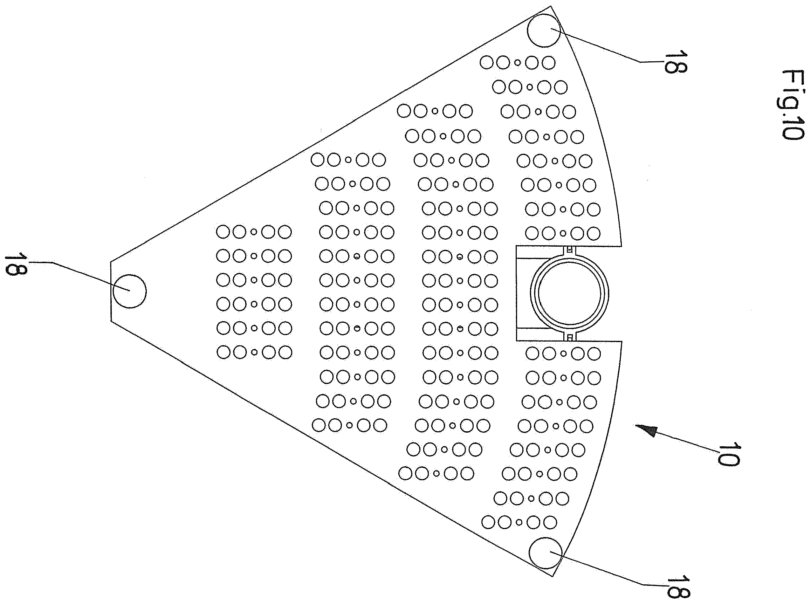

- Figur 10: desgleichen ohne Filterelemente.

In den Figuren ist ein Filter 1 zur Filtration von Suspensionen, insbesondere zur Filtration von Zuckersäften, zumindest in wesentlichen Teilen gezeigt. Der Filter 1 weist ein Gehäuse 2 mit Zulauf 3 zur Zuführung der zu filtrierenden Suspension, einen Ablauf 4 für das gefilterte, klare Filtrat und einen weiteren Ablauf in Form einer Abgabeöffnung 5 zur Abgabe des Filterkuchens auf. Das Gehäuse 2 weist dabei einen zylindrischen Teil 14 mit einem abnehmbaren Deckel 6 auf. Im zylindrischen Teil 14 ist eine Vielzahl von Filterelementen 7 angeordnet. Die Filterelemente 7 bestehen aus streifenartigen Filterkörpern 8, die von einem strumpfartigen Filtertuch 9 umhüllt sind.

Erfindungsgemäß sind die Filterelemente 7 an einem segmentartigen Filterträger 10 befestigt. Der Filterträger 10 weist eine Einlasskammer 11 für das aus den Filterelementen 7 abströmende Filtrat auf. Dabei ist vorgesehen, dass mehrere Filterträger 10 samt Filterelementen 7 in das Gehäuse 2 von einer Oberseite her einsetzbar und nebeneinander fixierbar sind. Die segmentartigen Filterträger 10 bilden zusammen einen kreisrunden Einsatz. Dabei weist jede Einlasskammer 11 eine Abströmöffnung 12 für Filtrat auf. Die Abströmöffnungen 12 sind mittelbar, beispielsweise mittels einer steckbaren Rohrverbindung, an eine Ringleitung 13 angeschlossen, die das Gehäuse 2 außenseitig umgibt und an diesem fixiert ist. Aus der Ringleitung 13 ist das gesammelte Filtrat an eine angeschlossene Aufnahmeeinrichtung, die nicht in den Figuren gezeigt ist, abführbar. Dabei verschließt der Deckel 6 in Betriebslage des Filters 1 die obere Einsatzöffnung des Gehäuses 2 und dichtet das Gehäuse 2 gegenüber der Umgebung ab.

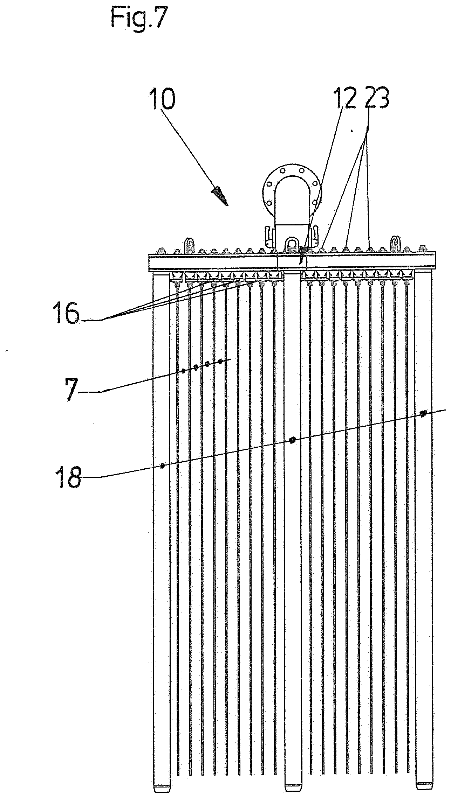

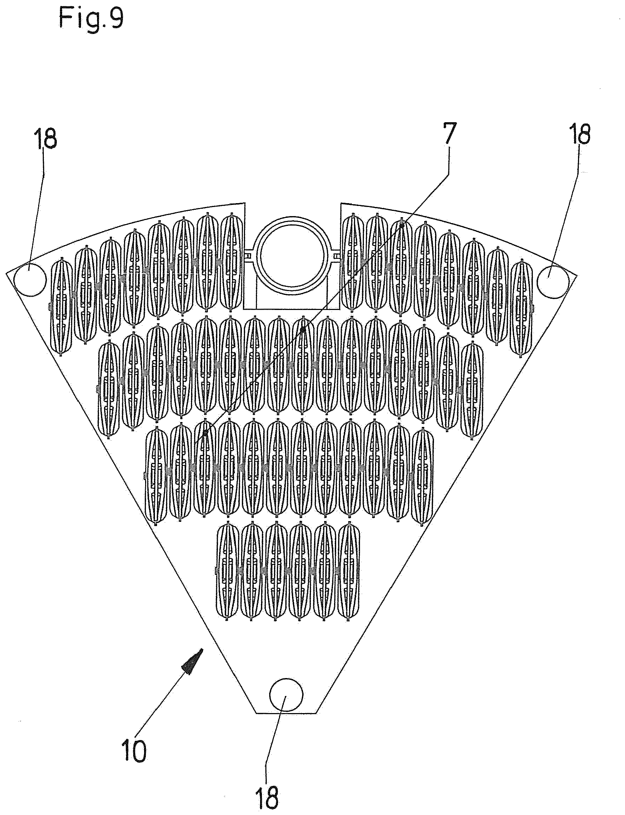

Im Ausführungsbeispiel weisen die segmentartigen Filterträger 10 eine tortenstückähnliche Form auf. Dabei ist jeweils eine Vielzahl von aus etwa rechteckigen Filterkörpern 8 und Filtertüchern 9 gebildeten Filterelementen 7 innerhalb eines tortenstückähnlichen segmentartigen Filterträgers 10 angeordnet, wobei die Filterelemente 7 am Filterträger 10 parallel zueinander angeordnet sind, wie insbesondere aus Figur 9 und Figur 7 ersichtlich. Hierdurch wird die durch den Zulauf 3 des Gehäuses 2 etwa mittig innerhalb des Gehäuses 2 ausmündende Suspension entlang der Längsseitenflächen jedes Filterelementes 7 in etwa radialer Richtung verteilt, ohne dass dabei eine Längsseitenfläche eines Filterelementes 7 den Flussstrom der Suspension bremst beziehungsweise blockiert. Hierdurch ist eine besonders hohe Filterleistung ermöglicht, sodass mit einer derartigen erfindungsgemäßen Anordnung eine große Menge an Suspension innerhalb von kurzer Zeit gefiltert werden kann.

Dabei sind die Längsseitenflächen jedes Filterelementes 7 in einer Parallelen zur radialen Mittelebene des jeweiligen segmentartigen Filterträgers 10 angeordnet.

Im Ausführungsbeispiel weist der Filter 1 sechs tortenstückähnliche segmentartige Filterträger 10 auf, die zusammen einen kreisrunden Einsatz bilden. Alternativ und in den Figuren nicht gezeigt, können auch vier, acht, zehn oder zwölf segmentartige Filterträger, die zusammen einen kreisrunden Einsatz bilden, vorgesehen sein.

Im Ausführungsbeispiel weist jeder segmentartige Filterträger 10 vier nebeneinander angeordnete Reihen von Filterelementen 7 auf. Dabei sind die Filterelemente einer Reihe jeweils parallel zueinander angeordnet und die äußerste erste Reihe und die daneben angeordnete zweite Reihe weisen jeweils sechzehn, die dritte Reihe zwölf und die nahe des Zentrums angeordnete vierte Reihe sechs parallel zueinander angeordnete Filterelemente 7 auf.

Der Zulauf 3 ist durch ein die Gehäusewand unterhalb der segmentartigen Filterträger 10 durchgreifendes und mittig im zylindrischen Teil 14 des Gehäuses 2 im Bereich der segmentartigen Filterträger 10 ausmündendes Rohr (bei 15) gebildet. Hierdurch ist eine besonders gleichmäßige Verteilung der Suspension auf alle sich im Filtergehäuse 2 befindlichen Filterelemente 7 ermöglicht.

Erfindungsgemäß weist jedes Filterelement 7 etwa rechteckige Form auf und besteht aus einem Halter 16 und einem am Halter 16 angeordneten Doppelschlitzblech als Filterkörper 8. Dabei ist das Doppelschlitzblech, welches den Filterkörper 8 bildet, flach und flexibel ausgebildet und von einem Filterstrumpf als Filtertuch 9 überzogen.

Zum erleichterten Abfluss des längsseitig entlang des Filterkörpers 8 fließenden Filtrats weist der Halter 16 oben in Richtung des Filterträgers 10 gerichtete und in diesem einmündende Abflussöffnungen 17 für das Filtrat auf. Hierdurch kann das Filtrat auf besonders schnelle und einfache Art und Weise aus dem jeweiligen Filterelement 7 durch dessen Halter 16 hindurch in die Einlasskammer 11 des segmentartigen Filterträgers 10 abgeführt werden. Zur besonders einfachen, schnellen und dabei lagerichtigen Montage und Demontage der einzelnen segmentartigen Filterträger 10 am Gehäuse 2 weist jeder segmentartige Filterträger 10 etwa parallel zu den Filterelementen 7 verlaufende Stützelemente, im Ausführungsbeispiel Stützstangen 18, auf. Die Stützstangen 18 stützen sich in der Einbaulage auf entsprechenden Stützbereichen 19, die im Ausführungsbeispiel an der Gehäuseinnenseite und am die Mittellängsachse bildenden Zulaufrohr (bei 15) ab und sind im Ausführungsbeispiel lagerichtig an diesen geführt. Hierdurch ist ein schnelles und einfaches und lagerichtiges Entfernen und Einsetzen einzelner segmentartiger Filterträger 10 ermöglicht.

Dabei weisen die segmentartigen Filterträger 10 eine etwa dreieckige Form auf. Die Stützelemente in Form von Stützstangen 18 sind in den Eckbereichen des Dreiecks angeordnet. Zur besonders schnellen und einfachen Kontrolle der Filterleistung beziehungsweise Filterqualität ist im Bereich eines Ablaufrohres 24, welches jeweils zwischen Abströmöffnung 12 des segmentartigen Filterträgers 10 und der außen um den zylindrischen Teil 14 des Gehäuses 2 umlaufenden zentralen Ringleitung 13 angeordnet ist, im außerhalb des Gehäuses 2 befindlichen Bereich ein Schauglas 20 angeordnet. Dieses Schauglas ermöglicht eine schnelle Beurteilung des Trübheitsgrades des Filtrats durch einfaches Betrachten eines geübten Bedieners. Sollte der Trübheitsgrad beispielsweise eines segmentartigen Filterträgers 10 einen sogenannten Trüblauf aufweisen, so kann der Bediener sofort diesen speziellen segmentartigen Filterträger 10 außer Betrieb setzen. Hierzu ist in einem dem Schauglas nahen Bereich der Ablaufrohre 24, die jeweils zwischen Abströmöffnung 12 des segmentartigen Filterträgers 10 und der außen um den zylindrischen Teil 14 des Gehäuses 2 umlaufenden zentralen Ringleitung 13 angeordnet sind, im außerhalb des Gehäuses 2 befindlichen Bereich ein Absperrventil 21 angeordnet. Dieses ermöglicht das schnelle und einfache außer Betrieb nehmen und gegebenenfalls wieder in Betrieb nehmen eines einzelnen segmentartigen Filterträgers 10.

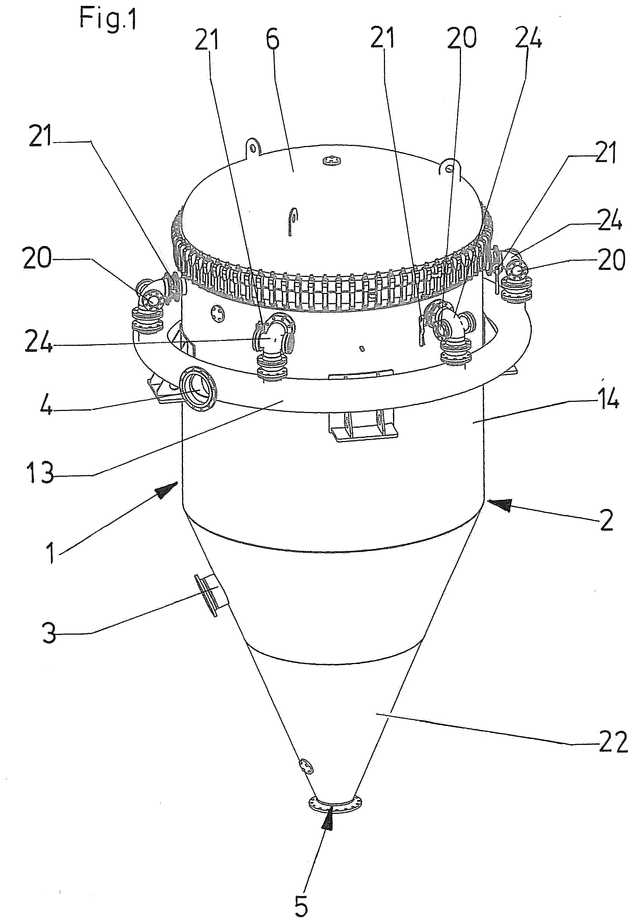

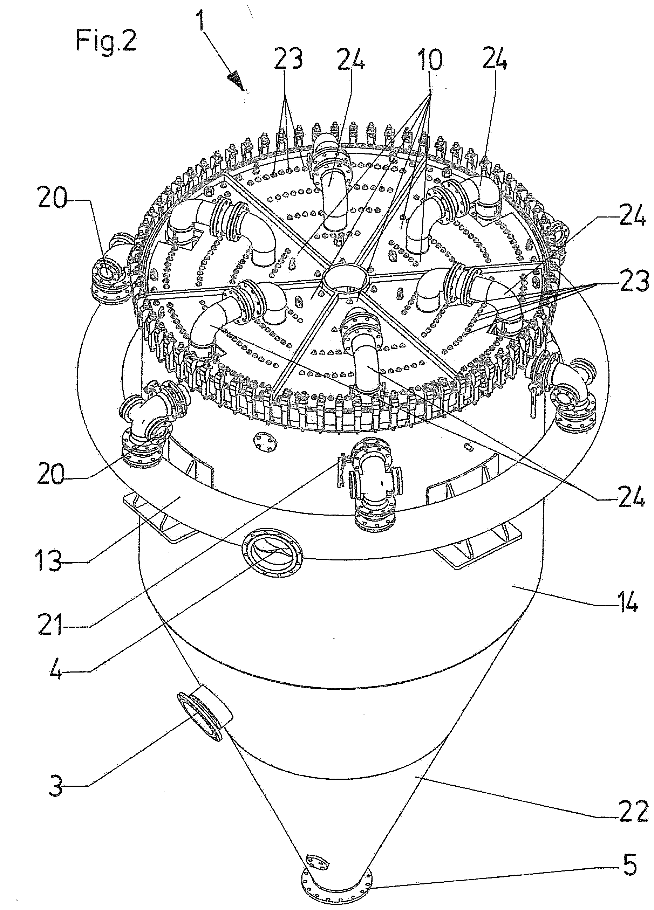

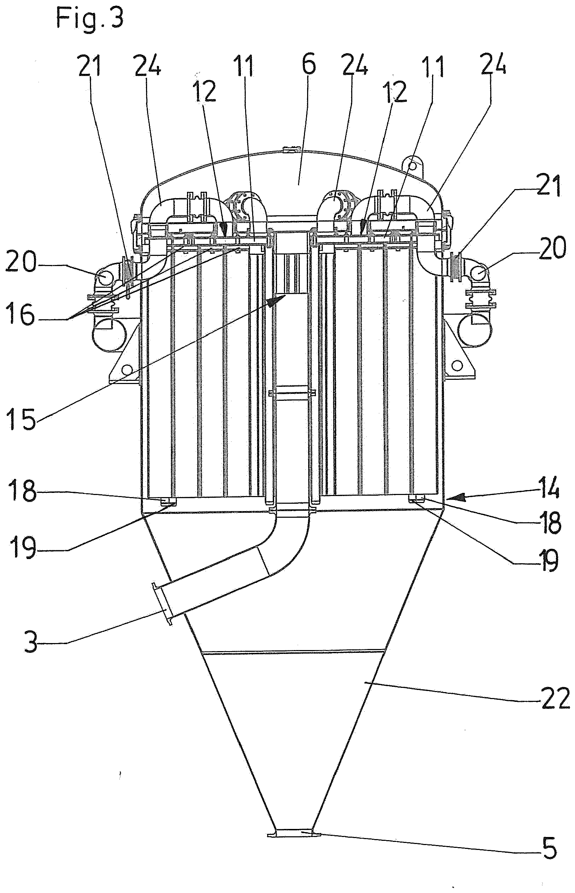

Wie insbesondere aus den Figuren 1 bis 3 ersichtlich, ist das Gehäuse 2 an seinem dem Deckel 6 entgegengesetztem Ende an den zylindrischen Bereich 14 anschließend trichterartig (bei 22) ausgebildet. Dabei bildet die Trichterspitze die Abgabeöffnung 5 zur Abgabe des Filterkuchens.

Jeder segmentartige Filterträger 10 weist zur Bildung der Einlasskammer 11 eine einen Hohlraum aufweisende Grundplatte auf. In dieser einen Hohlraum umfassenden Grundplatte ist die Einlasskammer 11 ausgebildet und dient zur Aufnahme des Filtrats sämtlicher an diesem segmentartigen Filterträger 10 angeschlossenen beziehungsweise mit diesem verbundenen Filterelemente 7.

Um ein schnelles und einfaches Austauschen einzelner Filterelemente 7 an einem segmentartigen Filterträger 10 zu ermöglichen, ist die Einlasskammer 11 von Befestigungsmitteln, im Ausführungsbeispiel Gewindebolzen 23, abgedichtet durchgriffen. Die Gewindebolzen 23 ragen dabei kopfseitig von den Haltern 16 der Filterelemente 7 ab und sind durch die entsprechenden Öffnungen der Einlasskammer 11 auf durchsteckbar und in dieser Lage befestigbar, beziehungsweise verschraubbar. Die Erfindung ist nicht auf das Ausführungsbeispiel beschränkt, sondern im Rahmen der Offenbarung vielfach variabel.

Alle in der Beschreibung und/oder Zeichnung offenbarten Einzel- und Kombinationsmerkmale werden als erfindungswesentlich angesehen.

### Bezugszeichenliste

- 1.: Filter
- 2.: Gehäuse
- 3.: Zulauf (von 2)
- 4.: Ablauf (von 2)
- 5.: Abgabeöffnung (von 2)
- 6.: Deckel
- 7.: Filterelement
- 8.: Filterkörper (von 7)
- 9.: Filtertuch (von 7)
- 10.: Segmentartiger Filterträger
- 11.: Einlasskammer (von 10)
- 12.: Abströmöffnung
- 13.: Ringleitung
- 14.: zylindrischer Teil an 2
- 15.: Mündung von 3
- 16.: Halter
- 17.: Abflussöffnung an 16
- 18.: Stützstangen
- 19.: Stützbereiche
- 20.: Schauglas
- 21.: Absperrventil
- 22.: trichterartiges Ende von 2
- 23.: Gewindebolzen
- 24.: Ablaufrohr

## Patentansprüche

1. Filter (1) zur Filtration von Suspensionen, insbesondere zur Filtration von Zuckersäften, zumindest aufweisend ein Gehäuse (2) mit Zulauf (3) zur Zuführung der zu filtrierenden Suspension, einen Ablauf (4) für das gefilterte, klare Filtrat, und einen weiteren Ablauf oder eine Abgabeöffnung (5) zur Abgabe des Filterkuchens, wobei das Gehäuse (2) einen zylindrischen Teil (14) mit einem abnehmbaren Deckel (6) aufweist, wobei im zylindrischen Teil (14) eine Vielzahl von Filterelementen (7) in Gruppen angeordnet sind, die aus streifenartigen Filterkörpern (8) bestehen, die von einem strumpfartigen Filtertuch (9) umhüllt sind, **dadurch gekennzeichnet, dass** die Filterelemente (7) an einem segmentartigen Filterträger (10) befestigt sind, der eine Einlasskammer (11) für das aus den Filterelementen (7) abströmende Filtrat aufweist, dass mehrere Filterträger (10) samt Filterelementen in das Gehäuse (2) von einer Oberseite her einsetzbar und nebeneinander fixierbar sind, wobei die segmentartigen Filterträger (10) zusammen einen kreisrunden Einsatz bilden, und dass jede Einlasskammer (11) eine Abströmöffnung (12) für Filtrat aufweist, wobei die Abströmöffnungen (12) an eine Ringleitung (13) angeschlossen sind, die das Gehäuse (2) außenseitig umgibt und an diesem fixiert ist, von der das gesammelte Filtrat an eine angeschlossene Aufnahmeeinrichtung abführbar ist, wobei der Deckel (6) in Betriebslage des Filters (1) die obere Einsatzöffnung des Gehäuses (2) verschließt.

2. Filter nach Anspruch 1, **dadurch gekennzeichnet, dass** die segmentartigen Filterträger (10) tortenstückähnliche Form aufweisen, wobei jeweils eine Vielzahl von aus etwa rechteckigen Filterkörpern (8) und Filtertüchern (9) gebildeten Filterelementen (7) innerhalb eines tortenstückähnlichen segmentartigen Filterträgers (10) parallel zueinander angeordnet sind.

3. Filter nach Anspruch 2, **dadurch gekennzeichnet, dass** die Längsseitenflächen jedes Filterelementes (7) in einer Parallelen zur radialen Mittelebene des jeweiligen segmentartigen Filterträgers (10) angeordnet ist.

4. Filter nach einem der Ansprüche 1 bis 3, **dadurch gekennzeichnet, dass** die Anzahl an segmentartigen Filterträgern (10), die zusammen einen kreisrunden Einsatz bilden 4, 6, 8,10 oder 12 beträgt.

5. Filter nach einem der Ansprüche 1 bis 4, **dadurch gekennzeichnet, dass** jeder segmentartige Filterträger (10) vier nebeneinander angeordnete Reihen von Filterelementen (7) aufweist, wobei die äußerste erste Reihe und die daneben angeordnete zweite Reihe jeweils sechzehn, die dritte Reihe zwölf und die nahe des Zentrums angeordnete vierte Reihe sechs parallel zueinander angeordnete Filterelemente (7) aufweist.

6. Filter nach einem der Ansprüche 1 bis 5, **dadurch gekennzeichnet, dass** das der Zulauf (3) durch ein die Gehäusewand unterhalb der segmentartigen Filterträger (10) durchgreifendes und mittig im zylindrischen Teil (14) des Gehäuses (2) im Bereich der segmentartigen Filterträger (10) ausmündendes Rohr (bei 15) gebildet ist.

7. Filter nach einem der Ansprüche 1 bis 6, **dadurch gekennzeichnet, dass** jedes Filterelement (7) etwa rechteckige Form aufweist und aus einem Halter (16) und einem am Halter angeordneten Doppelschlitzblech als Filterkörper (8) besteht, wobei das Doppelschlitzblech flach und flexibel ausgebildet ist und von einem Filterstrumpf überzogen ist.

8. Filter nach Anspruch 7, **dadurch gekennzeichnet, dass** der Halter (16) oben in Richtung des Filterträgers (10) gerichtete und in diesem einmündende Abflussöffnungen (17) für das Filtrat aufweist.

9. Filter nach einem der Ansprüche 1 bis 8, **dadurch gekennzeichnet, dass** jeder segmentartige Filterträger (10) etwa parallel zu den Filterelementen (7) verlaufende Stützelemente, beispielsweise Stützstangen (18) aufweist, die sich in der Einbaulage auf entsprechenden Stützbereichen (19), beispielsweise an der Gehäuseinnenseite und / oder am die Mittellängsachse bildenden Zulauf- Rohr (bei 15) abstützen und gegebenenfalls an diesen lagerichtig geführt sind.

10. Filter nach Anspruch 9, **dadurch gekennzeichnet, dass** die segmentartigen Filterträger (10) eine etwa dreieckige Form aufweisen, wobei die Stützelemente oder Stützstangen (18) in den Eckbereichen des Dreiecks angeordnet sind.

11. Filter nach einem der Ansprüche 1 bis 10, **dadurch gekennzeichnet, dass** im Bereich von Ablaufrohren 24, die jeweils zwischen Abströmöffnung (12) des segmentartigen Filterträgers (10) und der außen um den zylindrischen Teil (14) des Gehäuses (2) umlaufenden zentralen Ringleitung (13) angeordnet sind, im außerhalb des Gehäuses (2) befindlichen Bereich ein Schauglas (20) angeordnet ist.

12. Filter nach einem der Ansprüche 1 bis 11, **dadurch gekennzeichnet, dass** im Bereich von Ablaufrohren 24, die jeweils zwischen Abströmöffnung (12) des segmentartigen Filterträgers (10) und der außen um den zylindrischen Teil (14) des Gehäuses (2) umlaufenden zentralen Ringleitung (13) angeordnet sind, im außerhalb des Gehäuses (2) befindlichen Bereich ein Absperrventil (21) angeordnet ist.

13. Filter nach einem der Ansprüche 1 bis 12, **dadurch gekennzeichnet, dass** das Gehäuse (2) an seinem dem Deckel (6) entgegengesetzten Ende an den zylindrischen Bereich (14) anschließend trichterartig (bei 22) ausgebildet ist, wobei die Trichterspitze den verschließbaren Ablauf beziehungsweise die Abgabeöffnung (5) zur Abgabe des Filterkuchens bildet.

14. Filter nach einem der Ansprüche 1 bis 13, **dadurch gekennzeichnet, dass** jeder segmentartige Filterträger (10) zur Bildung der Einlasskammer (11) eine einen Hohlraum aufweisende Grundplatte aufweist.

15. Filter nach Anspruch 14, **dadurch gekennzeichnet, dass** die Einlasskammer (11) von Befestigungsmitteln, insbesondere Gewindebolzen (23), durchgriffen ist, gegebenenfalls abgedichtet, die von den Haltern (16) der Filterelemente (7) kopfseitig abragen.

## Claims

1. A filter (1) for filtration of suspensions, in particular for filtration of sugar-bearing liquids, at least including a housing (2) with an inlet (3) for supplying the suspension to be filtered, an outlet (4) for the filtered, clear filtrate, and another outlet or a outflow opening (5) for discharging the filter cake, the housing (2) including a cylindrical portion (14) with a removable lid (6), in the cylindrical portion (14) a multitude of filter elements (7) being arranged in groups consisting of strip-like filter bodies (8) that are enveloped by a sock-like filter cloth (9), **characterized by that** the filter elements (7) are attached at a segment-like filter carrier (10) including an inlet chamber (11) for the filtrate flowing out off the filter elements (7), that a plurality of filter carriers (10) together with filter elements can be fitted from above into the housing (2) and can be fixed side by side, the segment-like filter carriers (10) together forming a circular insert, and that each inlet chamber (11) includes an outflow opening (12) for the filtrate, the outflow openings (12) being connected to a ring line (13) surrounding the housing (2) at the outside thereof and being fixed thereto, from which the collected filtrate can be discharged to a connected receiving device, the lid (6), in the operating position of the filter (1), closing the upper insert opening of the housing (2).

2. The filter according to claim 1, **characterized by that** the segment-like filter carriers (10) have a wedge-type shape, wherein respectively a multitude of filter elements (7) formed from approximately rectangular filter bodies (8) and filter cloths (9) are arranged within a wedge-type segment-like filter carrier (10) in parallel to each other.

3. The filter according to claim 2, **characterized by that** the longitudinal side faces of each filter element (7) are arranged in parallel to the radial center plane of the respective segment-like filter carrier (10).

4. The filter according to one of claims 1 to 3, **characterized by that** the number of segment-like filter carriers (10), which together form a circular insert, is 4, 6, 8, 10, or 12.

5. The filter according to one of claims 1 to 4, **characterized by that** each segment-like filter carrier (10) includes four rows of filter elements (7) arranged side by side, the outermost first row and the adjacent second row each comprising sixteen, the third row comprising twelve, and the fourth row arranged close to the center comprising six filter elements (7) arranged in parallel to each other.

6. The filter according to one of claims 1 to 5, **characterized by that** the inlet (3) is formed by a tube (at 15) passing through the housing wall below the segment-like filter carriers (10) and terminating centrally in the cylindrical portion (14) of the housing (2) in the region of the segment-like filter carriers (10).

7. The filter according to one of claims 1 to 6, **characterized by that** each filter element (7) has an approximately rectangular shape and consists of a holder (16) and a double-slot sheet arranged at the holder as a filter body (8), the double-slot sheet having a flat and flexible configuration and being covered by a filter sock.

8. The filter according to claim 7, **characterized by that** the holder (16) includes at the top outlet openings (17) for the filtrate arranged in the direction of the filter carrier (10) and terminating therein.

9. The filter according to one of claims 1 to 8, **characterized by that** each segment-like filter carrier (10) includes support elements, for instance support rods (18), extending approximately in parallel to the filter elements (7), said support elements, in the mounting position, bearing against corresponding support sections (19), for instance at the housing inner side and/or at the inlet tube forming the central longitudinal axis (at 15) and, if applicable, being guided thereat in the correct position.

10. The filter according to claim 9, **characterized by that** the segment-like filter carriers (10) have an approximately triangular shape, the support elements or support rods (18) being arranged in the corner sections of the triangle.

11. The filter according to one of claims 1 to 10, **characterized by that** in the region of discharge tubes (24) that are respectively arranged between outflow opening (12) of the segment-like filter carrier (10) and central ring line (13) extending outside around the cylindrical portion (14) of the housing (2), a sight glass (20) is arranged in the region outside of the housing (2).

12. The filter according to one of claims 1 to 11, **characterized by that** in the region of discharge tubes (24) that are respectively arranged between outflow opening (12) of the segment-like filter carrier (10) and central ring line (13) extending outside around the cylindrical portion (14) of the housing (2), a shut-off valve (21) is arranged in the region outside of the housing (2).

13. The filter according to one of claims 1 to 12, **characterized by that** the housing (2) is configured, at its end opposite to the lid (6) and following to the cylindrical portion (14), as a funnel (at 22), the tip of the funnel forming the closable outlet or the outflow opening (5), respectively, for discharging the filter cake.

14. The filter according to one of claims 1 to 13, **characterized by that** each segment-like filter carrier (10) includes a base plate comprising a cavity for forming the inlet chamber (11).

15. The filter according to claim 14, **characterized by that** the inlet chamber (11) is penetrated by fixing means, in particular threaded bolts (23), if applicable, sealed, that protrude from the holders (16) of the filter elements (7) at the heads thereof.

## Revendications

1. Filtre (1) pour la filtration de suspensions, en particulier pour la filtration de jus de sucre, au moins comportant un boîtier (2) avec une entrée (3) pour l'alimentation de la suspension à filtrer, une sortie (4) pour le filtrat clair, filtré, et une sortie additionnelle ou une orifice de distribution (5) pour distribuer le gâteau de filtration, le boîtier (2) comportant une partie cylindrique (14) avec un couvercle amovible (6), dans la partie cylindrique (14) une multitude d'éléments de filtration (7) étant installés dans des groupes consistant en des corps filtrants (8) en forme de ruban qui sont enrobés d'une toile filtrante (9) de type chaussette, **caractérisé en ce que** les éléments de filtration (7) sont fixés à un support filtrant (10) de type segment comportant une chambre d'entrée (11) pour le filtrat s'écoulant hors des éléments de filtration (7), qu'une pluralité de supports filtrants (10) ensemble avec des éléments de filtration peuvent être insérés par le haut dans le boîtier (2) et peuvent être fixés mutuellement juxtaposés, les supports filtrants (10) de type segment ensemble formant un insert annulaire, et que chaque chambre d'entrée (11) comporte une orifice de distribution (12) pour le filtrat, les orifices de distribution (12) étant liées à un conduit annulaire (13) entourant le boîtier (2) à son extérieur et étant fixé à celui-ci, à partir duquel le filtrat ramassé peut être évacué à un dispositif de réception relié, le couvercle (6), en position de fonctionnement du filtre (1), fermant l'ouverture d'introduction supérieure du boîtier (2).

2. Filtre selon la revendication 1, **caractérisé en ce que** les supports filtrants (10) de type segment ont une forme de morceau de gâteau, dans lequel respectivement une multitude d'éléments de filtration (7) formés à partir de corps filtrants (8) environ rectangulaires et de toiles filtrantes (9) sont installés au-dedans d'un support filtrant (10) de type segment en forme de morceau de gâteau en parallèle entre eux.

3. Filtre selon la revendication 2, **caractérisé en ce que** les faces latérales longitudinales de chaque élément de filtration (7) sont installées en parallèle au plan central radial du support filtrant (10) de type segment respectif.

4. Filtre selon une des revendications 1 à 3, **caractérisé en ce que** le nombre des supports filtrants (10) de type segment, qui ensemble forment un insert annulaire, est de 4, 6, 8, 10, ou 12.

5. Filtre selon une des revendications 1 à 4, **caractérisé en ce que** chaque support filtrant (10) de type segment comporte quatre rangées d'éléments de filtration (7) installées mutuellement juxtaposés, la première rangée la plus extérieure et la deuxième rangée voisine chacune comprenant seize, la troisième rangée comprenant douze, et la quatrième rangée installée près du centre comprenant six éléments de filtration (7) installés en parallèle entre eux.

6. Filtre selon une des revendications 1 à 5, **caractérisé en ce que** l'entrée (3) est formée par un tuyau (à 15) traversant la paroi du boîtier au-dessous des supports filtrants (10) de type segment et débouchant centralement dans la partie cylindrique (14) du boîtier (2) au niveau des supports filtrants (10) de type segment.

7. Filtre selon une des revendications 1 à 6, **caractérisé en ce que** chaque élément de filtration (7) a une forme environ rectangulaire et consiste en un support (16) et une tôle à deux fentes installée au support comme corps filtrant (8), la tôle à deux fentes ayant une configuration plate et flexible et étant recouverte d'une chaussette filtrante.

8. Filtre selon la revendication 7, **caractérisé en ce que** le support (16) comporte en haut des ouvertures de sortie (17) pour le filtrat ménagées en direction du support filtrant (10) et débouchant là-dedans.

9. Filtre selon une des revendications 1 à 8, **caractérisé en ce que** chaque support filtrant (10) de type segment comporte des éléments de support, par exemple des tiges de support (18), s'étendant environ en parallèle aux éléments de filtration (7), ces éléments de support, en position de montage, étant en appui contre des sections de support (19) correspondantes, par exemple au côté intérieur du boîtier et/ou au tuyau d'entrée formant l'axe longitudinal central (à 15) et, le cas échéant, étant guidés à celles-ci dans la position correcte.

10. Filtre selon la revendication 9, **caractérisé en ce que** les supports filtrants (10) de type segment ont une forme environ triangulaire, les éléments de support ou les tiges de support (18) étant installés ou installées dans les sections de coin du triangle.

11. Filtre selon une des revendications 1 à 10, **caractérisé en ce qu'**au niveau de tuyaux de vidange (24) qui sont respectivement installés entre l'orifice de distribution (12) du support filtrant (10) de type segment et le conduit annulaire central (13) s'étendant à l'extérieur autour de la partie cylindrique (14) du boîtier (2), un hublot (20) est installé à l'extérieur du boîtier (2).

12. Filtre selon une des revendications 1 à 11, **caractérisé en ce qu'**au niveau de tuyaux de vidange (24) qui sont respectivement installés entre l'orifice de distribution (12) du support filtrant (10) de type segment et le conduit annulaire central (13) s'étendant à l'extérieur autour de la partie cylindrique (14) du boîtier (2), une vanne d'isolation (21) est installée à l'extérieur du boîtier (2).

13. Filtre selon une des revendications 1 à 12, **caractérisé en ce que** le boîtier (2) est agencé, à son extrémité à vis-à-vis du couvercle (6) et à proximité de la partie cylindrique (14), en forme d'une trémie (à 22), la pointe de la trémie formant la sortie obturable ou l'orifice de distribution (5), respectivement, pour distribuer le gâteau de filtration.

14. Filtre selon une des revendications 1 à 13, **caractérisé en ce que** chaque support filtrant (10) de type segment comporte une plaque de base comprenant une cavité pour former la chambre d'entrée (11).

15. Filtre selon la revendication 14, **caractérisé en ce que** la chambre d'entrée (11) est traversée par des moyens de fixation, en particulier des goujons filetés (23), le cas échéant, étanchés, qui font saillie des supports (16) des éléments de filtration (7) aux têtes de ceux-ci.
